# EUROPÄISCHE PATENTANMELDUNG

(11) **EP 0 941 007 A2**
(43) Veröffentlichungstag der Anmeldung: **08.09.1999**
(21) Anmeldenummer: 98123106.1
(22) Anmeldetag: 03.12.1998
(51) Int. Cl.: H04Q 11/04

(54) **Verfahren zum Vernetzen mehrerer Vermittlungsanlagen**

(30) Priorität: 03.03.1998 DE 19808907
(71) Anmelder: ROBERT BOSCH GMBH, 70442 Stuttgart (DE)
(72) Erfinder: Roessler, Georg, 60489 Frankfurt (DE); Artun, Berkan, 64293 Darmstadt (DE); Wagner, Joachim, 35625 Huettenberg (DE)

(57) **Zusammenfassung**

Zum Vernetzen von Vermittlungsanlagen (1, 2, 3) über mindestens einen Verbindungsknoten (4) wird in Abhängigkeit des zu erwartenden Verkehrsaufkommens für die Datenkanäle eine vorgegebene Datenkapazität reserviert. Diese Datenkanäle werden in jeder Vermittlungsanlage gemeinsam auf eine vorgegebene Summenbitrate hin überwacht.

Da keine Einzelkanalüberwachung stattfindet, ist der Bedarf an Bandbreite geringer als bei herkömmlichen Verfahren.

## Beschreibung

### Stand der Technik

Die Erfindung betrifft ein Verfahren zum Vernetzen mehrerer Vermittlungsanlagen über mindestens einen Verbindungsknoten, insbesondere einen ATM-Knoten.

Der Verbindungsaufbau in ATM-Netzen wird üblicherweise über ein Signalisierungsprotokoll angestoßen. Werden insbesondere ISDN-Vermittlungsanlagen über mindestens einen ATM-Knoten als 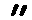 Backbone" miteinander vernetzt, so tritt ein Zeitverlust insbesondere durch den Verbindungsaufbau ein. Bei den standardisierten Übertragungsverfahren, z. B. bei CES (Circuit Emulations Service) oder dem 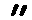 Landline Trunking" ist neben dem Zeitverlust durch den Verbindungsaufbau der Bedarf an Übertragungsbandbreite erheblich.

### Vorteile der Erfindung

Mit den Maßnahmen entsprechend den Merkmalen des Patentanspruchs 1 ist der Bedarf an Bandbreite geringer als bei herkömmlichen Verfahren zur Vernetzung von Vermittlungsanlagen, beispielsweise in einem ATM-System. Da der Bandbreitenbedarf ohne die erfindungsgemäße Lösungen mit n! steigt, wobei n die Anzahl der angeschlossenen Vermittlungsanlagen ist, bringt die erfindungsgemäße Lösung bereits bei wenigen Verbindungsknoten erhebliche Bandbreiteneinsparung. Der Mehraufwand für die Ausrüstung der Schnittstellen ist dagegen nur geringfügig.

Das Interworking zwischen der ATM-Übertragungstechnik und der ISDN-Technik der Vermittlungsanlagen findet auf Seiten der ISDN-Vermittlungsanlagen statt. Protokolle zwischen den ISDN-Vermittlungsanlagen sind für den ATM-Backbone transparent. Somit ist ein Interworking auf Protokollebene nicht notwendig.

Das Verfahren nach der Erfindung arbeitet insbesondere ohne spezielles Signalisierungsprotokoll. Dadurch können die Verbindungsaufbauzeiten minimiert werden.

### Zeichnungen

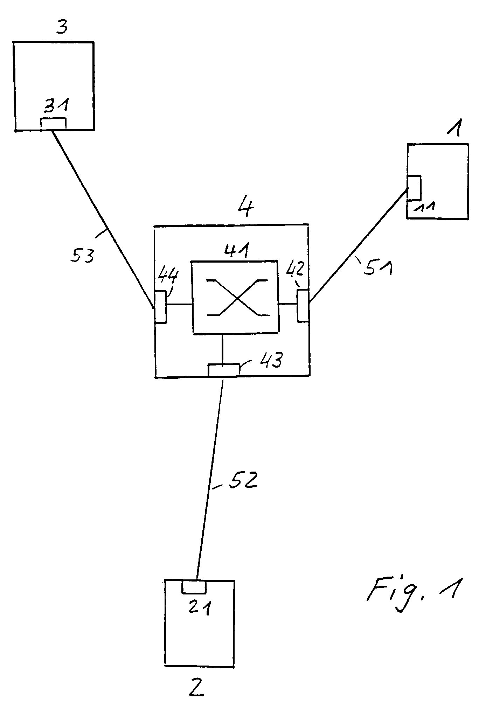

An Hand der Figur 1, die ein Blockschaltbild einer Vernetzung von Vermittlungsanlagen über einen Verbindungsknoten zeigt, werden Ausführungsbeispiele der Erfindung näher erläutert.

### Beschreibung von Ausführungsbeispielen

Wie in Figur 1 dargestellt, werden beispielsweise 3 ISDN-Vermittlungsanlagen 1, 2, 3 über einen Verbindungsknoten 4, vorzugsweise einen ATM-Knoten miteinander vernetzt.

Potentiell kann jede angeschlossene Vermittlungsanlage mit jeder anderen kommunizieren. Da keine Signalisierung verwendet wird, ist eine Vollvermaschung der Vermittlungsanlagen notwendig. Dies führt zu (n-1)! Kanälen mit entsprechender Bandbreite, die voreingestellt werden müssen, wobei n die Anzahl der angeschlossenen Vermittlungsanlagen ist. Da virtuelle Kanäle praktisch unbegrenzt verfügbar sind, entsteht hier kein Engpaß. Der Bandbreitenbedarf ist der limitierende Faktor. So ergibt sich für beispielsweise 6 Vermittlungsanlagen mit je 16 Mbit\s eine Datenkapazität von 1,9 Gbit\s. Da im Voraus bekannt ist, wieviel Verkehr eine Vermittlungsanlage an ihrer entsprechende Schnittstelle 11, 21, 31 produzieren kann, wird in Abhängigkeit des zu erwartenden Verkehrsaufkommens für alle Datenkanäle einer Vermittlungsanlage eine vorgegebene Datenkapazität für den Datenverkehr zwischen der jeweiligen Vermittlungsanlage und dem Verbindungsknoten 4 reserviert und entsprechend überwacht. Dies erfordert beispielsweise eine UPC (Usage Parameter Control) an diesen Schnittstellen 11, 21, 31. Statt einen einzelnen Datenkanal auf Einhaltung der Verkehrsparameter zu überwachen, wird die ganze Schnittstelle 11, 21 oder 31 mit allen Datenkanälen auf eine vorgegebene Summenbitrate hin überwacht. Die Summenbitrate kann einen voreingestellten Wert nicht überschreiten. Bei Erreichen der vorgegebenen Summenbitrate wird zusätzlicher Datenverkehr für die jeweilige Vermittlungsanlage gesperrt oder es wird auf eine Betriebsart ohne Überwachung der Datenkanäle auf eine gemeinsame Summenbitrate hin umgeschaltet; z. B. auf eine herkömmliche Einzelkanalüberwachung.

Die ISDN-Vermittlungsanlagen 1, 2, 3 werden vorzugsweise über UNI (User Network Interface)-Schnittstellen nach dem ATM-Forum UNI-Standard an einen ATM-Verbindungsknoten 4 über die Datenleitungen 51, 52, 53 angeschlossen. Um insbesondere Verbindungsaufbauzeiten zu minimieren, wird die spezielle UNI-Signalisierung aber nicht benutzt. Das Interworking zwischen ATM-Übertragungstechnik und ISDN-Vermittlungstechnik findet also auf Seiten der ISDN-Vermittlungsanlagen statt. Sämtliche Einstellungen des ATM-Knotens sind vom Netzwerkadministrator vorzunehmen. Protokolle zwischen den ISDN-Vermittlungsanlagen sind für den ATM-Backbone transparent. Ein Interworking auf Protokollebene ist somit nicht notwendig.

Beispielsweise können bei dem Verfahren nach der Erfindung pro Datenkanal einer Vermittlungsanlage virtuell zwei 2 MBit\s reserviert werden, wobei die Gesamtbandbreite für alle reservierten Datenkanäle eine Vermittlungsanlage geringer bemessen ist als das Produkt aus der Anzahl der Datenkanäle und der jeweils reservierten virtuellen Einzelkanalbandbreite.

Für die Reservierung der vorgegebenen Datenkapazität wird vorzugsweise zuerst eine Reservierung im ATM-Knoten 4 bzw. in dessen Koppelfeld 41 vorgenommen und anschließend erst eine entsprechende Reservierung in den Anschlußschaltungen (42, 43, 44) für die einzelnen Vermittlungsanlagen 1, 2, 3.

Anstatt die Summenbitrate an den Schnittstellen der Vermittlungsanlagen 1, 2, 3 in Richtung ATM-Knoten 4 zu überwachen, kann auch die Summenbitrate jeweils in den Anschlußschaltungen 42, 43, 44 der Vermittlungsanlage beim ATM-Knoten 4 überwacht werden.

Das erfindungsgemäße Verfahren gestattet auch die Vernetzung mehrerer Vermittlungsanlagen über mehrere Verbindungsknoten. Bei dieser Ausgestaltung ist es vorteilhaft die Bandbreitenreservierung für alle ATM-Knoten bzw. Schnittstellenschaltungen vorzunehmen.

Werden die vorgegebenen Summenbitraten nur teilweise überschritten, können Teilnetze immer noch mit den Maßnahmen der Erfindung weiter arbeiten und die übrigen Teilnetze in einen herkömmlichen Betrieb umgeschaltet werden.

## Patentansprüche

1. Verfahren zum Vernetzen mehrerer Vermittlungsanlagen (1, 2, 3) über mindestens einen Verbindungsknoten, insbesondere einen ATM-Knoten (4), mit folgenden Schritten:
- In Abhängigkeit des zu erwartenden Verkehrsaufkommens wird für alle Datenkanäle einer Vermittlungsanlage (1, 2, 3) eine vorgegebene Datenkapazität für den Datenverkehr zwischen der jeweiligen Vermittlungsanlage (1, 2, 3) und dem Verbindungsknoten (4) reserviert,
- Die Datenkanäle jeder Vermittlungsanlage (1, 2, 3) werden gemeinsam auf eine vorgegebene Summenbitrate hin überwacht.
- Bei Erreichen dieser vorgegebenen Summenbitrate wird zusätzlicher Datenverkehr für die jeweilige Vermittlungsanlage (1, 2, 3) gesperrt oder es wird auf eine Betriebsart ohne Überwachung der Datenkanäle auf eine gemeinsame Summenbitrate hin umgeschaltet.

2. Verfahren nach Anspruch 1, dadurch gekennzeichnet, daß für die Vernetzung der Vermittlungsanlagen (1, 2, 3), die insbesondere nach dem ISDN-Standard arbeiten, eine Datenübertragung mittels dem ATM-Verfahren eingesetzt, jedoch ohne Verwendung eines speziellen Signalisierungsprotokolls für die ATM-Übertragung insbesondere während eines Verbindungsaufbaus.

3. Verfahren nach Anspruch 1 oder 2, dadurch gekennzeichnet, daß für die Schnittstellen (11, 21, 31) der Vermittlungsanlagen (1, 2, 3) Schnittstellen nach dem UNI (User Network Interface)-Standard bei ATM verwendet werden, wobei die Signalisierung nach dem UNI-Standard jedoch nicht verwendet wird.

4. Verfahren nach den Ansprüchen 1 bis 3, dadurch gekennzeichnet, daß pro Datenkanal einer Vermittlungsanlage (1, 2, 3) virtuell zwei Mbit\s reserviert werden, wobei die Gesamtbandbreite für alle reservierten Datenkanäle einer Vermittlungsanlage (1, 2, 3) geringer bemessen wird, als das Produkt aus der Anzahl der Datenkanäle und der jeweils reservierten virtuellen Einzelkanalbandbreite.

5. Verfahren nach einen der Ansprüche 1 bis 4, dadurch gekennzeichnet, daß die Protokolle für den Datenverkehr zwischen den Vermittlungsanlagen (1, 2, 3) über den\die Verbindungsknoten, insbesondere ATM-Knoten (4) transparent durchgereicht werden.

6. Verfahren nach einen der Ansprüche 1 bis 5, dadurch gekennzeichnet, daß für die Reservierung der vorgegebenen Datenkapazität zuerst eine Reservierung im Verbindungsknoten\ATM-Knoten (4) bzw. in dessen Koppelfeld (41), vorgenommen wird und anschließend erst eine entsprechende Reservierung in den Anschlußschaltungen (41, 43, 44) für die einzelnen Vermittlungsanlagen (1, 2, 3)
